# EUROPEAN PATENT APPLICATION

(11) **EP 0 568 483 A1**
(43) Date of publication of application: **03.11.1993**
(21) Application number: 93500053.9
(22) Date of filing: 26.04.1993
(51) Int. Cl.: A23L 1/325

(54) **Composition of a food product from fish flesh**

(30) Priority: 30.04.1992 ES 9200908
(71) Applicant: TUNIMAR, S.A., E-33002 Oviedo (ES)
(72) Inventor: Almendres Martinez, José Javier, E-33002 Oviedo (ES)
(74) Representative: Pons Arino, Angel

(57) **Abstract**

Composition of a food product in which to obtain one kilogramme by weight of the same the following is used:
925 to 990 grammes of blue fish, cut up and boned.
5 to 65 grammes of condiments and herbs.
5 to 10 grammes of fish gelatine.

The composition gives rise to a food product that, divided into portions, is preserved by freezing and is cooked at the moment of consumption.

## Description

The present Invention refers to the composition of a food product that must be cooked after dividing into portions, for example into hamburgers.

The composition of the invention gives rise to a bromatological product that, starting with a mash of species of fatty and semi-fatty blue fish and appropriate natural condiments, guarantees that the said product will preserve over time the interesting qualities and natural characteristics of these fish, all based on an industrial process of conservation by refrigeration, creation of inert atmospheres, vacuum packing, etc..

As is known, blue fish can be used to advantage in a balanced diet: the fats are rich in polyunsaturated fatty acids and help to balance cholesterol levels. These fish have no vitamin C but contain modest amounts of the other hydrosoluble vitamins, with the exception of niacine or antipelagic vitamin, and vitamin B12 which is found in a higher proportion, and they are also a good source of lyposoluble vitamins A and D.

The majority of minerals required for nutrition are present in the fish and are a good source of iodine and calcium.

Thus the maintenance of the natural qualities and characteristics of the basic raw material may be specified under four important objectives that will determine the maximum quality to be achieved in the composition of the preparations:
1. Preserve the proportion and quality of fats rich in polyunsaturated acids that contribute to the regulation of cholesterol.
2. Conserve the vitamin complexes and as far as possible add to them by the mixtures of natural condiments.
3. Maintain the contribution of proteins and minerals, preserving them in the most perfect state and also adding to them by mixtures of natural condiments.
4. Achieve organoleptic qualities (colour, texture, aroma and taste) in the end product to make it appetizing to everyone, young and old.

By covering these objectives, a food is obtained that is appropriate for all ages and of exceptional dietetic importance because of its action to regulate cholesterol, its mineral and vitamin content and, in general, its nutritional quality without excessive calories. It is a product that also allows various gastronomic applications since it can be combined with many different sauces, herbs, garnishes, etc..

The composition of the invention is made up of various species of fatty and semi-fatty blue fish, the majority belonging to the following families: clupeids, scombrides, carangids, engraulids, beloniforms and salmonoids.

From both the nutrition and gastronomic, and also the commercial points of view, the following variables must be taken into account: percentage of fat, protein and vitamin contents, intensity of flavour and smell-aroma, colour, percentage of red muscle to be eliminated, texture when fresh and after defreezing, time under refrigeration and frozen and the market price in relation to the desired manufacturing cost. The interrelations between these ten variables will give a constant indication of the importance, appropriateness or need to include a specific species and the groups of these to be considered in view of their qualities.

The percentage of lipids is, without doubt, the most important quality factor because:
a) Lipids are responsible for the dietetic excellence of blue fish, thanks to their good proportion of polyunsaturated fatty acids that help to regulate cholesterol.
b) When they oxidize they produce typical rancid aromas and flavours that are a good indication of the state of the fish since the indicative threshold during a sensorial analysis is very low, around 2%.
c) Oxidated lipids contribute to the breakdown of proteins, causing changes in their functional and nutritional properties.
d) The formation of oxidated lipid and protein compounds has colour changes associated with it.

Thus oxidation of lipids is precisely the time limiting factor for storage and conservation, both for fresh and frozen species, and before and after the production processes.

Lipids influence the quality of the fish in various ways:
a) Because of its self-oxidation (rancidness) where various external factors influence its speed: presence of catalizers or inhibitors, water activity, technological process applied, etc. and others depending on the characteristics of the lipids themselves; proportion of highly unsaturated fatty acids, proportion of free fatty acids, placement of the lipids within the tissue, nature of the compound to which the fatty acid belongs and its position in the same.
b) Through the influence on the proteins by the polyunsaturated fatty acids during breakdown. Specifically, during conservation by freezing, oxidation of lipids causes alterations in the proteins and blotching effects.

One of the principal objectives of the composition is to impede the oxidation and breakdown of polyunsaturated fatty acids to the greatest possible degree. Their state will also be an indicator for use as a criterion for acceptance of raw material.

The fatty and semi-fatty blue fish used in the composition of the invention can belong to any of the three main groups of species mentioned below:
First group - Clupeids.
Second group - Large scombrides
Third group - Carangids, engraulids, beloniforms and small scombrides, as well as salmonoids.

Also the basic condiments that must be used in the composition include salt and sugar, while the herbs used belong to a wide diversity of families, of which the most important are: labiates, umbellifers, myrtaceae, zingiberals, papilionids, liliales, iridacias, crucifers, piperales, myristacea, lauraceae and rutacea.

In the composition of the invention the following are used, in quantity and quality, per kilogramme of weight:
925 to 990 grammes of blue fish, cut up and boned.
5 to 65 grammes of condiments and herbs.
5 to 10 grammes of fish gelatine.

Having sufficiently described the nature of the invention and the manner of putting it into practice, it should be noted that the above descriptions may be modified so long as the fundamental principle is not altered.

## Claims

1. Composition of a food product characterised because to obtain one kilogramme by weight of composition the following are used:
925 to 990 grammes of blue fish, cut up and boned.
5 to 65 grammes of condiments and herbs.
5 to 10 grammes of fish gelatine.

2. Composition according to claim 1 characterised because the blue fish used comes preferably from a first group formed by clupeids and a second group made up of large scombrides, and/or a third group formed by carangids, engraulids, beloniforms and small scombrides, as well as salmonoids.

3. Composition according to claim 1 characterised because the condiments are salt and sugar, and because the herbs used belong among others to the families of: labiates, umbellifers, myrtaceae, zingiberals, papilionids, liliales, iridacias, crucifers, piperales, myristacea, lauraceae and rutacea.
